# EUROPEAN PATENT SPECIFICATION

(11) **EP 1 279 472 B1**
(45) Date of publication and mention of the grant of the patent: **12.09.2007**
(21) Application number: 02016460.4
(22) Date of filing: 23.07.2002
(51) Int. Cl.: B29C 31/10, B65G 53/56

(54) **Plastic granule automatic conveyance device**
Automatische Transportvorrichtung von Kunststoffgranulat
Dispositif de transport automatique de granulés en matière plastique

(30) Priority: 27.07.2001 IT PD20010191
(43) Date of publication of application: 29.01.2003
(73) Proprietor: S.B. Plastic Machinery S.n.c., San Giorgio delle Pertiche (PD) (IT)
(72) Inventor: Schiavolin, Italo, San Giorgio delle Pertiche (PD) (IT)
(74) Representative: Gustorf, Gerhard

(56) References cited:
- EP-A- 0 995 703
- DE-A- 4 406 545
- US-A- 5 383 493

## Description

### FIELD OF THE INVENTION

The present invention concerns a machine for the production of plastic objects by the moulding of granules and in particular it concerns a new device for the conveyance of plastic granules from various deposits containing different granules to various moulding units.

### STATE OF THE ART

In the industry for the production of plastic objects there is the problem of having to produce various objects with different plastic materials and/or in different colours.

The plastic granules are held in silos from which they are conveyed to the moulding units through ducts.

At present an operator must manually connect the different ducts with the suction pump, which performs the pneumatic transport of the granules to the moulding units. This means that the time necessary to change type or colour of plastic is considerable and there is the risk of taking the wrong duct or of connecting the ducts badly, with resulting infiltration of air and therefore a lower flow of plastic granules.

There are devices for conveying plastic granules that comprise a horizontal row of openings, to which the various ducts arriving from the various silos are connected, and one opening, connected to the moulding unit, which moves above the row of openings and can be coupled with them. This device allows different types of plastic granules to be conveyed towards a single moulding unit.

There are devices for conveying plastic granules that comprise a vertical fixed wheel provided with openings arranged in a circle, to which the various ducts arriving from the various silos are connected, and one opening, connected to the moulding unit, mounted on a disc rotating parallel to the disc with the various openings.

A plastic granule conveyance device as set forth in the preamble of claim 1 is known from US-A 5 383 493. In a first embodiment two rotary discs are disposed in a housing which comprises an apertured disc interposed between said rotary discs. In the starting position, all hose connections from a silo to the machines are open in a certain combination. If a material conveyance pairing a determined silo to a determined machine is desired, one of said rotary discs is displaced by 90° clockwise and the other disc is displaced by 90° counterclockwise. In a modified embodiment the distribution of the material streams is controlled by guiding two movable plates in two dimensions in the x and y direction, whereas in a third embodiment the plates are movable relative to one another in one dimension only. In both cases it is not possible to connect only one silo duct to only one machine duct.

DE-A 44 06 545 discloses a conveyance device which is provided with two compound slide rests the slide of each one of said supports being connected to the opposed slide by a flexible tube.

### DESCRIPTION

The invention relates to a new device for the automatic conveyance of plastic granules from various storage silos to various moulding units.

It is an object of the invention to allow the conveyance of the plastic granules from a large number of drawing ducts to a large number of delivery ducts in a reduced space.

The object is solved according to the features of claim 1. Further embodiments of the invention are defined in the features of the dependent claims.

The invention provides a plastic granule automatic conveyance device comprising two vertical rectangular plates facing each other and moving laterally and vertically on their vertical plane, with an interposed pneumatic shutter.

Each plate has several cylindrical openings connected, on the non-exposed side of the plate, to as many ducts that in turn are connected to plastic granule storage silos or to moulding units.

The central shutter is composed of a horizontal main cylinder, with axis perpendicular to the two plates, and two cylinders sliding inside the main cylinder. The two internal sliding cylinders are moved towards the outside and towards the inside of the main cylinder by compressed air, so that they couple with the openings on the plates.

The characteristics of the new automatic device for conveying plastic granule from various storage silos to various moulding units will be better explained by the following description with reference to the drawings enclosed as an example without limitation.

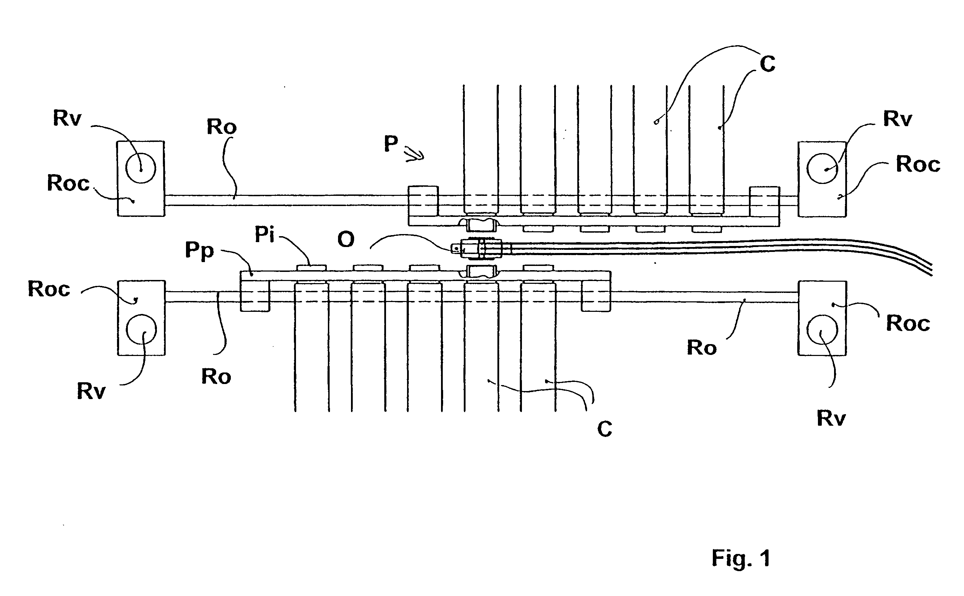

Figure 1 shows a top view of the new device comprising, in its main parts, two plates facing each other (P) and a central shutter (O).

Each plate (P) comprises a vertical panel (Pp) to which cylindrical openings (Pi) passing through the panel (Pp) are fixed.

The end of each opening (Pi) opposite the other plate (P) is connected to a suitable duct (C) connected to a silo (S) containing plastic granules.

The openings (Pi) of each plate (P) may be arranged in various ways on the panel (Pp), preferably organised in several rows having the same number of openings.

Each of the two plates (P) slides on two or more horizontal guides or rails (Ro) parallel to the panel (Pp), in such a way as to obtain the horizontal movement of the plate (P).

The ends of said horizontal guides or rails (Ro) are joined to suitable cursors (Roc) sliding on columns or vertical guides (Rv), in such a way as to obtain the vertical movement of the plates (P) and of the horizontal guides or rails (Ro).

Suitable mechanisms, for example electric motors or pneumatic pistons (not shown in the figure), carry out the horizontal movement of the plate (P) on the horizontal guides or rails (Ro) and the movement of the plate (P) and of the horizontal guides or rails (Ro) on the columns or vertical guides (Rv).

The combined horizontal and vertical movements of the plate (P) allow any opening (Pi) of the plate (P) to be aligned with the shutter (O).

Said shutter (O) is placed in a central position with respect to the two plates (P).

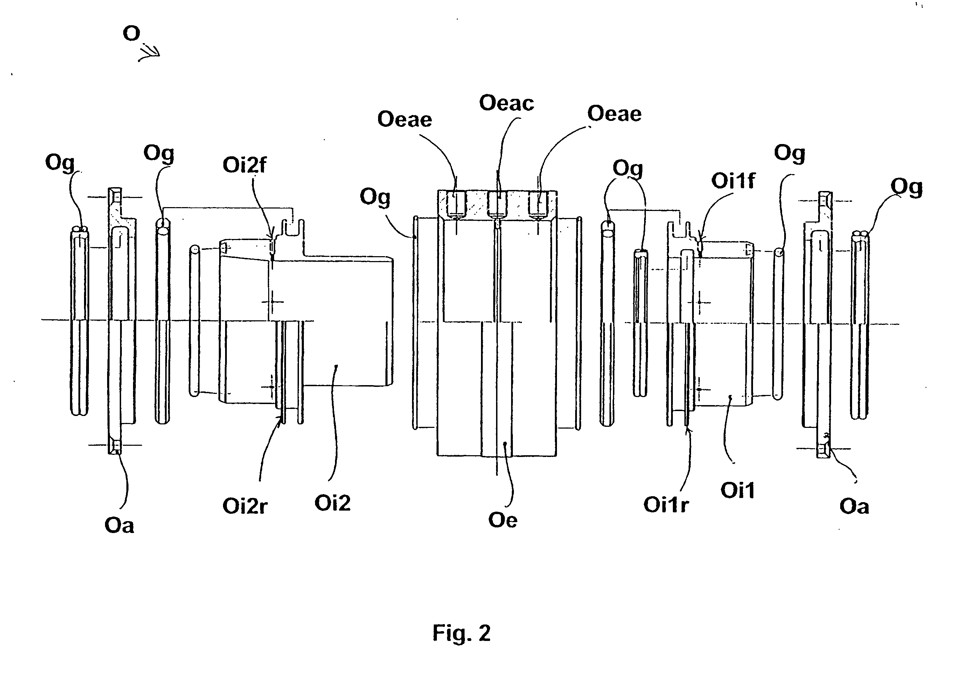

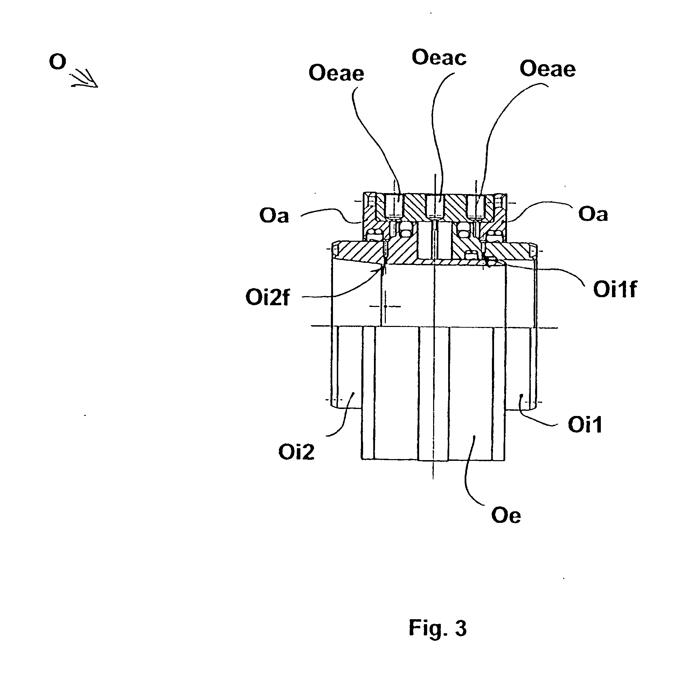

Figures 2 and 3 represent partially sectional side views of the various separate parts of the pneumatic shutter (O) and of the assembled pneumatic shutter (O), respectively.

The pneumatic shutter (O) mainly comprises an external cylinder (Oe) inside which two internal cylinders (Oi1, Oi2) with various sealing rings (Oa) and O-rings (Og) run coaxially.

On the external surface of the external cylinder (Oe) there are three connections (Oea), that is, three threaded holes, which are orthogonal to the axis of the external cylinder (Oe). These three connections (Oea) communicate with the inside of the external cylinder (Oe) and are then connected to as many compressed air ducts.

The internal cylinders (Oi1, Oi2) are composed of concentric cylinders positioned one (Oi1) inside the other (Oi2), sliding coaxially with each other and inside the external cylinder (Oe).

On the external surface of each of the two internal cylinders (Oi1, Oi2) there is a ring-shaped ridge (Oi1r, Oi2r). In particular, the internal cylinder (Oi2) with a smaller diameter (the innermost one) presents said ring-shaped ridge (Oi2r) indicatively half-way along its length, while the internal cylinder (Oi1) with a larger diameter presents said ring-shaped ridge (Oi1r) on its edge further inside the external cylinder (Oe).

Each internal cylinder (Oi1, Oi2) also presents one or more through holes (Oi1f, Oi2f) in correspondence with the corner between its ridge (Oi1r, Oi2r) and its external surface facing the outside of the external cylinder (Oe).

Two rings (Oa) applied to the ends of the external cylinder (Oe) limit the outward travel of the internal cylinders (Oi1, Oi2).

The ridges (Oi1r, Oi2r) of the internal cylinders (Oi1, Oi2) are such that, when said internal cylinders (Oi1, Oi2) have moved towards the outside of the external cylinder (Oe), each of the outermost connections (Oeae) of the external cylinder communicates with the chamber formed by the external surface of the internal cylinders (Oi1, Oi2), the internal surface of the external cylinder (Oe), the ridges (Oi1r, Oi2r) of the internal cylinders (Oi1, Oi2) and the rings (Oa) at the end of the external cylinder (Oe). On the other hand, the central connection (Oeac) communicates with the chamber formed by the two ridges (Oi1r, Oi2r), the external surface of the internal cylinders (Oi1, Oi2) and the internal surface of the external cylinder (Oe).

On the outside edges of the ridges (Oi1r, Oi2r), on the inside edges of the rings (Oa) at the ends of the external cylinder (Oe), on all the sliding surfaces and on the outside edges of the internal cylinders (Oi1, Oi2) there are O-rings (Og).

When compressed air is sent into the ducts for the outermost connections (Oeae), it acts on the ridges (Oi1r, Oi2r) of the internal cylinders (Oi1, Oi2), pushing said internal cylinders (Oi1, Oi2) towards the inside of the external cylinder (Oe); when the internal cylinders (Oi1, Oi2) have reached the innermost position in the external cylinder (Oe), part of the air flows out of the through holes (Oi1f, Oi2f) present in the internal cylinders (Oi1, Oi2). Vice versa, when compressed air is sent into the duct for the central connection (Oeac), the ridges (Oi1r, Oi2r) of the internal cylinders (Oi1, Oi2), and the cylinders (Oi1, Oi2) are pushed towards the outside of the external cylinder (Oe).

The movements of the plates (P) and the activation of the shutter (O) are controlled by a special electronic circuit (E).

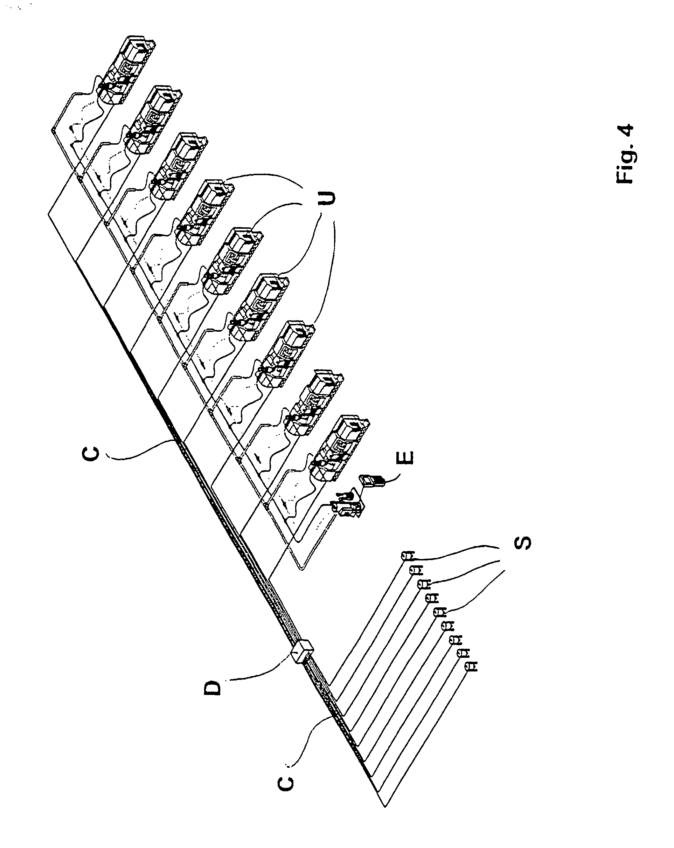

Figure 4 illustrates the use of the new conveyance device (D) connected, by means of ducts (C), to the silos (S) containing the plastic granules, to the moulding units (U) and to the electronic control circuit (E).

The operation of the new device for the automatic conveyance of plastic granules from various storage silos (S) to various moulding units (U) composed as in the above description may be summed up as follows:
- when a moulding unit (U) requires plastic granules of a given type, the electronic circuit (E) determines what duct corresponds to the silo (S) containing the necessary granules and what duct corresponds to the moulding unit (U) that needs these granules;
- the electronic circuit (E) activates the mechanisms for moving the two plates (P) so that the opening (Pi) for the moulding unit (U) and the opening (Pi) for the silo (S) containing the granules are exactly aligned with the shutter (O);
- the electronic circuit (E) gives the command to send compressed air into the duct for the central connection (Oeac) of the external cylinder (Oe) of the shutter (O), so as to move the internal cylinders (Oi1, Oi2) of the shutter (O) towards the outside;
- this movement brings the edge of said internal cylinders (Oi1, Oi2) in contact with the two openings (Pi) of the two plates (P), so that they are in communication;
- in this position the moulding unit (U) takes the granules from the silo (S), usually by vacuum; the granules pass through the openings (Pi) of the plates (P) and into the shutter (O);
- when the moulding unit (U) has finished taking the granules of plastic material, the electronic circuit (E) gives the command to send compressed air into the ducts for the external connections (Oeae) of the external cylinder (Oe) of the shutter (O), so as to move the internal cylinders (Oi1, Oi2) of the shutter (O) towards the inside;
- this movement substantially detaches the internal cylinders (Oi1, Oi2) from the openings (Pi) of the two plates (P); secondarily, owing to this movement the air sent into the shutter (O) penetrates inside the shutter (O), blowing out any granules that may have been left inside the shutter (O) ;
- the cycle can start again immediately to connect two other openings (Pi) of the two plates (P).

The new device for the automatic conveyance of plastic granules from various storage silos (S) to various moulding units (U) composed as described above presents considerable advantages.

It is possible to connect a large number of silos (S) containing plastic granules with a large number of moulding units (U), thus allowing the production of articles with several types or colours of plastic material.

The size of the new device is very compact in comparison with the number of connections that can be obtained.

The plastic granules cannot remain in the common exchange areas (shutter) at the end of each moulding operation.

## Claims

1. Plastic granule automatic conveyance device, comprising two vertical rectangular plates (P) facing each other and moving on their vertical plane, wherein each plate has several cylindrical openings (Pi) connected, on the non-exposed side of the plate, to as many ducts (C) that in turn are connected to plastic granule storage silos (S) or to moulding units (U), **characterized in that** a pneumatic shutter (O) is interposed between said two plates (P) and is composed of concentric cylinders (Oe, Oi1, Oi2), at least two of which move coaxially until they reach the openings (Pi) of the two plates (P) aligned with said shutter (O).

2. Conveyance device according to claim 1, wherein each plate (P) slides on two or more horizontal guides or rails (Ro) parallel to the plate (P), and wherein the ends of said horizontal guides or rails (Ro) are joined to suitable cursors (Roc) sliding on columns (Rv) or vertical guides, and wherein suitable mechanisms carry out the horizontal movement of the plate (P) on the horizontal rails or guides (Ro) and the movement of the plate (P) and of the horizontal rails or guides (Ro) on the columns or vertical guides (Rv).

3. Coveyance device according to claim 1 or 2, wherein the shutter (O) mainly comprises an external cylinder (Oe) with connections (Oea) for pneumatic ducts (C), inside said external cylinder (Oe) at least two internal cylinders (Oi1, Oi2) with ring-shaped ridges (Oi1r, Oi2r) and O-rings run coaxially, and wherein said connections (Oea) of the external cylinder (Oe) communicate with chambers formed by the external surface and by said ring-shaped ridges of the internal cylinders (Oi1, Oi2) and by the inside wall of the external cylinder (Oe), and wherein the compressed air sent into one or more connections (Oea) of the external cylinder (Oe) causes the outward or inward movement of the internal cylinders (Oi1, Oi2), and wherein the outward movement of the internal cylinders (Oi1,Oi2) causes them to insert in the openings (Pi) of the plates (P) aligned with the shutter (O).

4. Conveyance device according to any of the preceding claims, wherein the shutter (O) presents communication holes (Oi1f, Oi2f) between the pressure chambers for the movement of the internal cylinders (Oi1,Oi2) and the inside of said internal cylinders, and wherein said communication holes (Oif1, Oif2) are placed in positions such as to allow the passage of compressed air only when the internal cylinders have moved inside the shutter (O).

5. Conveyance device according to any of the preceding claims, **characterized in that** it is provided with an electronic circuit (E) for the control and command of the various mechanisms of the conveyance device, and wherein said electronic control and command circuit (E) determines which duct (C) corresponds to the silo (S) containing the necessary granules and which duct corresponds to the moulding unit (U) that needs these granules, activates the mechanisms for moving the two plates (P) so that the opening (Pi) for the moulding unit (U) and the opening (Pi) for the silo (S) containing the granules are exactly aligned with the shutter (O), gives the command to send compressed air into the suitable ducts (Oeac) of the shutter (O), so as to move the internal cylinders (Oi1,Oi2) towards the outside until said internal cylinders bring their edge in contact with the two openings (Pi) of the two plates (P), waits until the moulding unit (U) has taken the granules from the silo (S), gives the command to send compressed air into the suitable ducts (Oeae) and (Oif1, Oif2), so as to move the internal cylinders (Oi1, Oi2) of the shutter (O) towards the inside and detach them from the openings (Pi) of the plates and clean the ducts.

## Patentansprüche

1. Automatische Transportvorrichtung für Kunststoffgranulat mit zwei vertikalen, rechteckigen Platten (P), die einander gegenüberliegen und in ihrer vertikalen Ebene verschiebbar sind, wobei jede Platte mehrere zylindrische Öffnungen (Pi) hat, die auf der rückwärtigen Seite der Platte mit ebenso vielen Leitungen (C) verbunden sind, welche ihrerseits an Vorratsbehälter (S) für Kunststoffgranulat bzw. an Preßformeinheiten (U) angeschlossen sind, **dadurch gekennzeichnet, daß** zwischen den beiden Platten (P) ein pneumatisches Verschlußorgan (O) angeordnet ist, das aus konzentrischen Zylindern (Oe, Oi1, Oi2) besteht, von denen wenigstens zwei koaxial verschiebbar sind, bis sie die zu dem Verschlußorgan (O) ausgerichteten Öffnungen (Pi) der beiden Platten (P) erreichen.

2. Transportvorrichtung nach Anspruch 1, **dadurch gekennzeichnet, daß** jede Platte (P) auf zwei oder mehr horizontalen, parallel zu der Platte (P) verlaufenden Führungen oder Schienen (Ro) verschiebbar ist, deren Enden mit geeigneten Gleitsteinen (Roc) verbunden sind, die auf Säulen (Rv) oder vertikalen Führungen verschiebbar sind, und daß entsprechende Getriebe für die Horizontalbewegung der Platte (P) auf den horizontalen Schienen oder Führungen (Ro) und für die Bewegung der Platte (P) und der horizontalen Schienen oder Führungen (Ro) auf den Säulen bzw. vertikalen Führungen (Rv) vorgesehen sind.

3. Transportvorrichtung nach Anspruch 1 oder 2, **dadurch gekennzeichnet, daß** das Verschlussorgan (O) im wesentlichen einen äußeren Zylinder (Oe) mit Anschlüssen (Oea) für pneumatische Leitungen (C) hat, wobei innerhalb des äußeren Zylinders (Oe) wenigstens zwei innere Zylinder (Oi1, Oi2) mit ringförmigen Rippen (Oi1r, Oi2r) und O-Ringen koaxial verschiebbar sind und die Anschlüsse (Oea) des äußeren Zylinders (Oe) mit Kammern verbunden sind, die gebildet werden durch die Außenfläche und die ringförmigen Rippen der inneren Zylinder (Oi1, Oi2) und durch die Innenwand des äußeren Zylinders (Oe), wobei bei Zufuhr von Druckluft in eine oder mehrere Anschlüsse (Oea) des äußeren Zylinders (Oe) die inneren Zylinder (Oi1, Oi2) nach außen bzw. innen verschoben werden und bei einer Verschiebung der inneren Zylinder (Oi1, Oi2) nach außen diese in die zu dem Verschlußorgan (O) ausgerichteten Öffnungen (Pi) der Platten (P) eingreifen.

4. Transportvorrichtung nach einem der vorhergehenden Ansprüche, **dadurch gekennzeichnet, daß** das Verschlußorgan (O) Verbindungsbohrungen (Oi1f, Oi2f) zwischen den Druckkammern für die Verschiebung der inneren Zylinder (Oi1, Oi2) und der Innenseite dieser inneren Zylinder hat, wobei diese Verbindungsbohrungen (Oi1f, Oi2f) in solche Stellungen gebracht werden können, daß Druckluft nur dann durchströmen kann, wenn die inneren Zylinder in das Verschlußorgan (O) hinein verschoben worden sind.

5. Transportvorrichtung nach einem der vorhergehenden Ansprüche, **dadurch gekennzeichnet, daß** für die Steuerung und den Antrieb der einzelnen Getriebe der Transportvorrichtung eine elektronische Schaltung (E) vorgesehen ist, die ermittelt, welche Leitung (C) dem Behälter (S) entspricht, der das gewünschte Granulat enthält, und welche Leitung der Pressformeinheit (U) entspricht, welche dieses Granulat benötigt, die die Getriebe aktiviert, um die beiden Platten (P) so zu verschieben, daß die Öffnung (Pi) für die Pressformeinheit (U) und die Öffnung (Pi) für den das Granulat enthaltenden Behälter (S) exakt zu dem Verschlussorgan (O) ausgerichtet sind, die einen Steuerbefehl für die Abgabe von Druckluft in die entsprechenden Anschlüsse (Oeac) des Verschlußorgans (O) abgibt, so daß die inneren Zylinder (Oi1, Oi2) nach außen verschoben werden, bis deren Kanten in Berührung mit den beiden Öffnungen (Pi) der beiden Platten (P) kommen, die wartet, bis die Pressformeinheit (U) das Granulat aus dem Behälter (S) entnommen hat, und dann den Steuerbefehl zur Abgabe von Druckluft in die entsprechenden Anschlüsse (Oeae) und Bohrungen (Oi1f, Oi2f) abgibt, wodurch sich die inneren Zylinder (Oi1, Oi2) des Verschlußorgans (O) nach innen verschieben und damit außer Eingriff mit den Öffnungen (Pi) der Platten kommen und die Leitungen säubern.

## Revendications

1. Dispositif automatique de transport de granulés de matière synthétique comprenant deux plaques rectangulaires verticales (P) se faisant face et déplaçables dans leur plan vertical, chaque plaque ayant plusieurs ouvertures cylindriques (Pi) reliées sur la face arrière de la plaque à un nombre égal de conduites (C) conduisant respectivement à des silos (S) de stockage des granulés, ou à des unités de moulage (U), **caractérisé par le fait que**, entre les deux plaques, est prévu un organe d'obturation pneumatique (O) composé de cylindres concentriques (Oe, Oi1, Oi2) dont deux sont déplaçables dans le sens coaxial jusqu'à atteindre les ouvertures (Pi) des deux plaques (P) alignées sur l'organe d'obturation (O).

2. Dispositif de transport selon la revendication 1, **caractérisé par le fait que** chaque plaque (P) est déplaçable sur deux ou plusieurs guides ou rails (Ro) horizontaux parallèlement à la plaque (P), les extrémités de ces guides ou rails (Ro) étant reliées à des coulisseaux adéquats (Roc) se déplaçant sur des colonnes (Rv) ou guides verticaux, et **par le fait que** sont prévus des mécanismes pour le déplacement horizontal de la plaque (P) sur les guides ou rails (Ro) et pour le déplacement de la plaque (P) et des guides ou rails horizontaux (Ro) sur les colonnes ou guides verticaux (Rv).

3. Dispositif de transport selon la revendication 1 ou 2, **caractérisé par le fait que** l'organe d'obturation (O) présente essentiellement un cylindre extérieur (Oe), avec des raccords (Oea) pour les conduites pneumatiques (C), et au moins deux cylindres intérieurs (Oi1, Oi2) déplaçables dans le sens coaxial entre le cylindre extérieur (Oe) et présentant des nervures annulaires (Oi1r, Oi2r) et des joints toriques, les raccords (Oea) du cylindre extérieur (Oe) étant reliés à des chambres formées par la surface extérieure et les nervures annulaires des cylindres intérieurs (Oi1, Oi2) et par la paroi intérieure du cylindre extérieur (Oe), l'alimentation d'air comprimé dans un ou plusieurs raccords (Oea) du cylindre extérieur (Oe) déplaçant les cylindres intérieurs (Oi1, Oi2) vers l'extérieur ou vers l'intérieur, le déplacement des cylindres intérieurs (Oi1, Oi2) vers l'extérieur ayant pour effet que les deux cylindres intérieurs viennent s'engager dans les ouvertures (Pi) des plaques (P) alignées sur l'organe d'obturation (O).

4. Dispositif de transport selon une des revendications précédentes, **caractérisé par le fait que** l'organe d'obturation (O) présente des trous de raccord (Oi1f, Oi2f) entre les chambres de pression, pour le déplacement des cylindres intérieurs (Oi1, Oi2), et la surface intérieure desdits cylindres intérieurs, les trous de raccord (Oi1f, Oi2f) étant aptes à être mis dans des positions dans lesquelles l'air comprimé puisse passer seulement quand les cylindres intérieurs ont été engagés dans l'organe d'obturation (O).

5. Dispositif de transport selon une des revendications précédentes, **caractérisé par le fait qu'**est prévu un circuit électronique (E) pour la commande et l'entraînement des différents mécanismes du dispositif de transport, circuit qui détermine quelle conduite (C) correspond au silo (S) contenant le granulé désiré et quelle conduite correspond à l'unité de moulage nécessitant ce granulé, circuit qui active les mécanismes pour le déplacement des deux plaques (P) de sorte que l'ouverture (Pi) pour l'unité de moulage (U) et l'ouverture (Pi) pour le silo (S) contenant le granulé soient alignées exactement sur l'organe d'obturation (O), circuit qui émet un signal de commande pour l'admission d'air comprimé dans les raccords correspondants (Oeac) de l'organe d'obturation (O) de sorte que les cylindres intérieurs (Oi1, Oi2) soient déplacés vers l'extérieur jusqu'à ce que leur bord vienne en contact avec les deux ouvertures (Pi) des deux plaques (P), circuit qui attend que l'unité de moulage (U) ait reçu le granulé du silo (S) et qui donne ensuite le signal de commande pour l'admission d'air comprimé dans les raccords (Oeae) et les trous (Oi1f, Oi2f) correspondants, ce qui a pour effet que les cylindres intérieurs (Oi1, Oi2) de l'organe d'obturation (O) se déplacent vers l'intérieur et se dégagent des ouvertures (Pi) des plaques et que les conduites soient nettoyées.
